# NOUVEAU FASCICULE DE BREVET EUROPEEN

(11) **EP 1 269 133 B2**
(45) Date de publication et mention de la décision concernant l'opposition: **10.03.2010**
(45) Mention de la délivrance du brevet: 19.05.2004
(21) Numéro de dépôt: 02708427.6
(22) Date de dépôt: 27.02.2002
(51) Int. Cl.: G01L 3/10

(54) **CAPTEUR DE POSITION, NOTAMMENT DESTINE A LA DETECTION DE LA TORSION D'UNE COLONNE DE DIRECTION**
POSITIONSSENSOR, INSBESONDERE ZUR MESSUNG DES DREHMOMENTS EINER LENKSÄULE
POSITION SENSOR, DESIGNED IN PARTICULAR FOR DETECTING A STEERING COLUMN TORSION

(30) Priorité: 02.03.2001 FR 0102905
(43) Date de publication de la demande: 02.01.2003
(73) Titulaire: Moving Magnet Technologies (S.A.), 25000 Besançon (FR)
(72) Inventeur: GANDEL, Pierre, F-25660 Montfaucon (FR); FRACHON, Didier, F-25000 Besançon (FR); ANGLEVIEL, Didier, F-25000 Besançon (FR); OUDET, Claude, F-25000 Besançon (FR); PRUDHAM, Daniel, F-25220 Thise (FR)
(74) Mandataire: Breese, Pierre
(86) Numéro de dépôt international: PCT/FR2002/000718
(87) Numéro de publication internationale: WO 2002/071019

(56) Documents cités:
- DE-A- 19 816 831
- DE-A- 19 817 886
- GB-A- 588 677
- US-A- 4 784 002
- US-A- 4 984 474

## Description

La présente invention concerne le domaine des capteurs de position, et plus particulièrement les capteurs de position destinés à la mesure de la torsion d'une colonne de direction, sans que cette application ne soit exclusive.

On connaît dans l'état de la technique le brevet américain US4984474 décrivant un capteur de l'état de la technique, présentant une partie statorique constituée par une pièce ferromagnétique formant des dents radiales, sur deux étages, placées en regard d'aimants multipolaires aimantés radialement en sens alternés.

Une pièce ferromagnétique additionnelle est placée en regard de la partie statorique, et présente un entrefer dans lequel est disposée une sonde de Hall.

Cette solution de l'art antérieur n'est pas satisfaisante car elle conduit à une perte de signal magnétique entre la partie statorique et la partie comprenant la sonde de Hall. Par ailleurs, le champ magnétique généré par les aimants donne lieu à des pertes dues à la structure du capteur.

On connaît également dans l'état de la technique un capteur décrit dans le brevet américain US4784002 décrivant un autre capteur de position, constitué par une partie présentant une pluralité d'aimants orientés axialement, coopérant avec des dents radiales d'une partie statorique.

Cette structure conduit également à des fuites magnétiques et à une efficacité réduite, se traduisant par un rapport "signal sur bruit" médiocre.

Le but de la présente invention est de remédier à ces inconvénients en proposant un capteur de position amélioré, dont le rapport signal sur bruit est meilleur.

Un autre but de l'invention est de réduire l'encombrement radial.

A cet effet, l'invention concerne un capteur de position selon l'une des revendications 1 à 13.

L'invention concerne également un capteur de torsion selon l'une des revendications 14 à 16

La présente invention sera mieux comprise à la lecture de la description qui suit, se référant aux dessins annexés relatifs à un exemple non limitatif de réalisation, où :
- la figure 1 représente une vue schématique d'une colonne de direction ;
- la figure 2 représente une vue éclatée d'un premier exemple de réalisation d'un capteur ;
- la figure 3 représente une vue de la deuxième structure dudit capteur ;
- la figure 4 représente une vue agrandie, en coupe partielle, du capteur ;
- la figure 5 représente une vue éclatée d'une deuxième forme de réalisation ;
- la figure 6 représente la courbe de réponse du capteur selon la figure 5 ;
- la figure 7 représente une autre variante de réalisation (sonde fixe et stator fixe) ;
- la figure 8 représente une vue en coupe transversale,
- La figure 9 représente une variante de réalisation de l'invention dans laquelle l'entrefer de détection est situé entre deux éléments fixes.

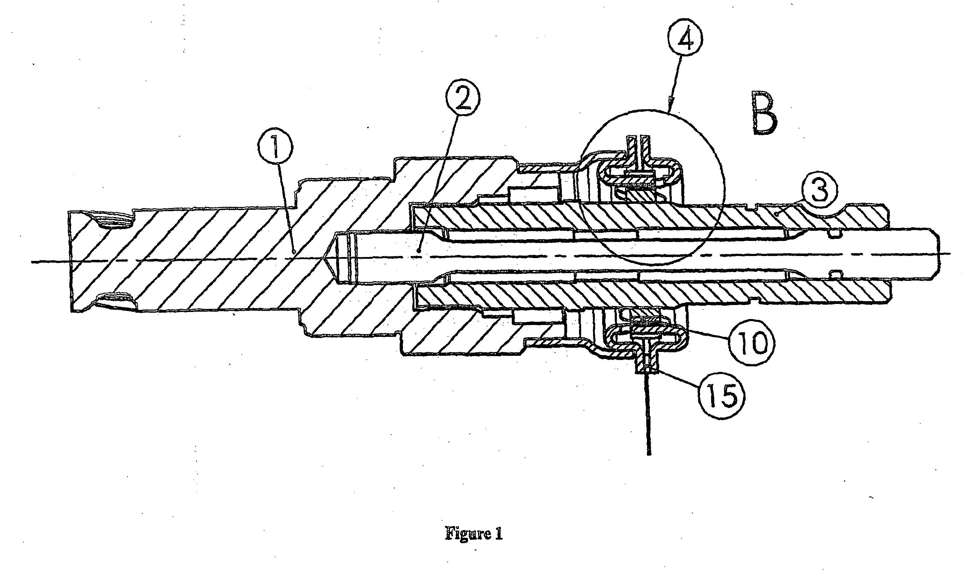

L'objet de l'invention est de remédier à ces problèmes de faibles sensibilités et est relative aux capteurs de position sans contact destiné à la mesure d'angles voisins ou inférieurs à 10°, dans des applications telles que les capteurs de couple de colonne de direction par exemple (le signal sera ensuite exploité pour l'assistance de direction). Le capteur de position angulaire décrit dans ce qui suit est destiné à la mesure d'un écart angulaire très faible (quelques degrés) entre deux arbres reliés par une barre de torsion. Une telle application de mesure de couple est décrite à la figure 1. Dans le domaine de déformation linéaire de cette barre de torsion, cet écart angulaire (α1 - α2) sera proportionnel au couple appliqué entre les deux arbres (1) (3) reliés par une éprouvette (2) déformable élastiquement. La mesure de cet écart angulaire par le capteur va permettre de délivrer un signal électrique en sortie de l'élément magnétosensible qui soit proportionnel au couple appliqué. Dans le cas du capteur de couple de colonne de direction le capteur (4) doit de plus permettre la mesure de l'écart angulaire entre deux arbres tournant par rapport au référentiel fixe qu'est l'habitacle de la voiture. C'est-à-dire que α₁ et α₂ sont des angles qui peuvent être supérieurs à 360° (la colonne de direction peut faire plusieurs tours). La mesure angulaire doit donc avoir lieu entre les deux arbres (1) (3) lorsque la barre de torsion (2) se déforme, chacun des deux arbres étant libres en rotation sur plusieurs tours. Un angle de travail en torsion typique dans cette application est de +/-2° à +/-4° maximum. On voit donc que le problème consiste d'une part à fournir un capteur de position très sensible et d'autre part un système permettant à l'élément magnétosensible d'être fixe par rapport au référentiel habitacle.

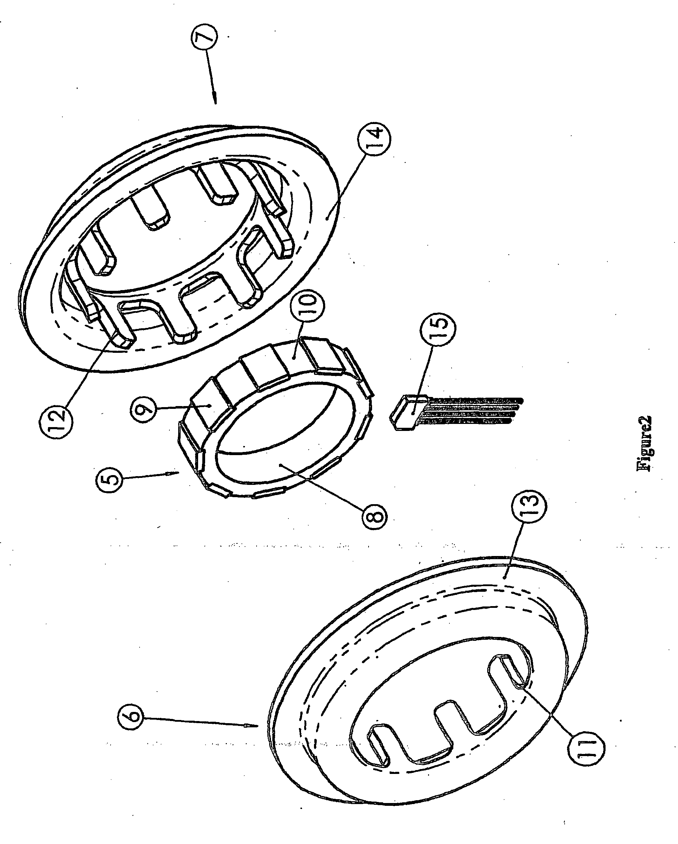

La figure 2 représente une vue éclatée d'un premier exemple de réalisation d'un capteur selon l'invention.

Il est constitué d'une première structure magnétique (5) et d'une deuxième structure magnétique formée par deux couronnes (6, 7) imbriquées. Les deux structures magnétiques présentent une forme générale tubulaire et sont coaxiales.

La première structure magnétique (5) est formée par une culasse (8) de forme tubulaire présentant des cavités pour le logement d'une pluralité d'aimants minces (9) aimantés selon une direction radiale, ou selon une direction parallèle à la direction radiale passant par le centre de l'aimant.

Ces aimants sont encastrés dans une cavité présentant entre 0,2 et 0,9 fois l'épaisseur de l'aimant.

Les aimants sont séparés par des secteurs angulaires (10) de la culasse.

La deuxième structure est formée de deux couronnes ferromagnétiques (6, 7) présentant des dents (11, 12) s'étendant axialement, et séparées par des intervalles vides permettant l'imbrication des dents de la couronne opposée.

Les dents sont prolongées par une zone de fermeture de flux respectivement (13, 14) s'étendant globalement dans un plan transversal, perpendiculaire à l'orientation principale des dents.

Ces deux zones de fermeture de flux délimitent un entrefer annulaire (16) dans lequel est positionnée un élément magnétosensible (15).

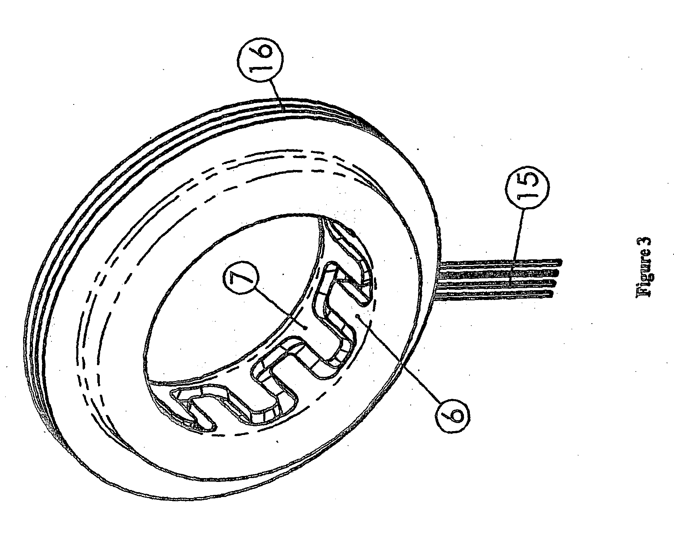

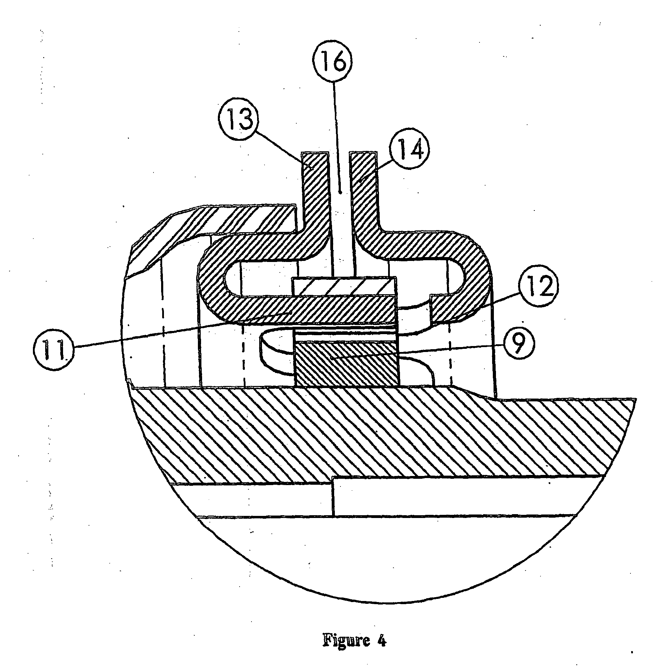

La figure 3 représente une vue de la deuxième structure assemblée, sans la première structure qui vient se loger dans la cavité centrale et la figure 4 une vue en détail et en coupe dudit capteur.

La première structure comporte N aimants (9), et chacune des couronnes de la deuxième structure présente N dents. L'élément magnétosensible (15), par exemple une sonde à effet Hall programmable, est fixe par rapport au référentiel fixe correspondant à l'habitacle. Il est placé dans l'entrefer (16) entre les 2 collecteurs ferromagnétiques (13) (14) qui ont chacun collecté le flux de N dents, et de façon à permettre aux 2 coupelles de tourner de plusieurs tours.

Chacune des structures est rotative par rapport au référentiel habitacle et présente un mouvement différentiel de quelques degrés l'un par rapport à l'autre en fonction du couple appliqué, qui va se traduire par une variation de flux de quelques centaines de Gauss dans l'entrefer tournant (16). Le signal analogique issu de la sonde de Hall (15) fournira donc une image électrique du couple appliqué entre les 2 arbres supportant d'une part le stator (6, 7) et d'autre part le rotor (5).

Dans le cas des capteurs de couple de colonne de direction, l'information de couple est en général exploitée pour piloter un moteur électrique du type moteur à courant continu sans balai (BLDC). L'action de ce moteur électrique va être de fournir l'assistance électrique de direction, en fournissant un couple proportionnel à celui détecté par le capteur de couple, tout en suivant une position proportionnelle à celle de la colonne de direction. De tels moteurs possèdent en général 3 bobinages appelés « phases » réparties à 120° électriques. La rotation de ces moteurs triphasés est assurée par un contrôleur qui va générer 3 signaux sinusoïdaux d'amplitude proportionnelle au couple fourni par le capteur de couple, tout en suivant une position proportionnelle à celle de la colonne de direction. En général ces 2 informations de couple et de position proviennent de deux capteurs différents.

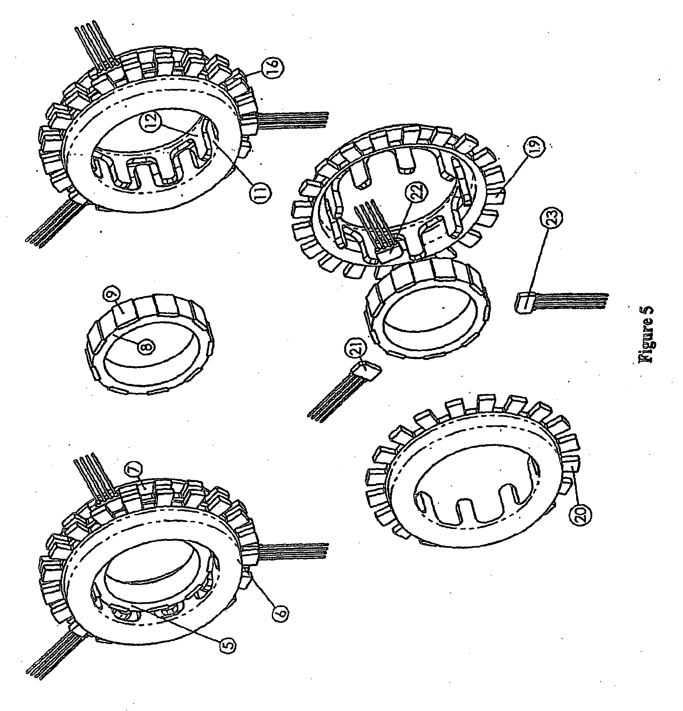

Selon l'invention décrite à la figure 5, il est possible que les collecteurs magnétiques (13) (14) soient dentés, et possèdent D dents (19,20) sur 360°. Un élément magnétosensible (15) placé dans l'entrefer (16) de la figure 5 verra donc un champ magnétique alterné, de période proportionnelle à D et à la position de la partie « statorique » (5) qui est tournante par rapport au référentiel fixe habitacle (mais statorique par rapport au rotor (6)(7)), et aussi proportionnel au couple exercé entre (5) et (6)(7).

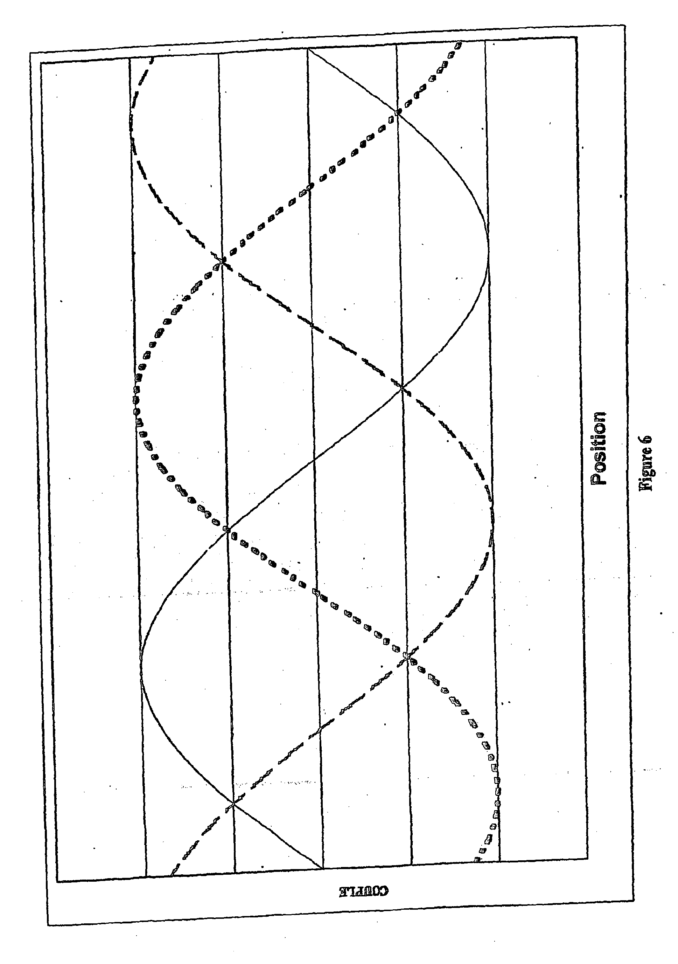

Si l'on place dans l'entrefer (16) 3 éléments magnétosensibles (21, 22, 23) espacés d'un pas polaire équivalent à 120° de période électrique, on obtient en sortie de ces 3 éléments magnétosensibles les 3 sinusoïdes décrites à la figure 6, dont l'amplitude est proportionnelle au couple exercé sur la colonne de direction, et qui donnent en même temps une information de position de la colonne de direction.

Si l'on choisit judicieusement le nombre de dents D en fonction du rapport de réduction R souvent associé au moteur BLDC, ces 2 informations combinées peuvent être directement utilisées pour piloter le moteur BLDC au travers d'un étage de puissance à transistors.

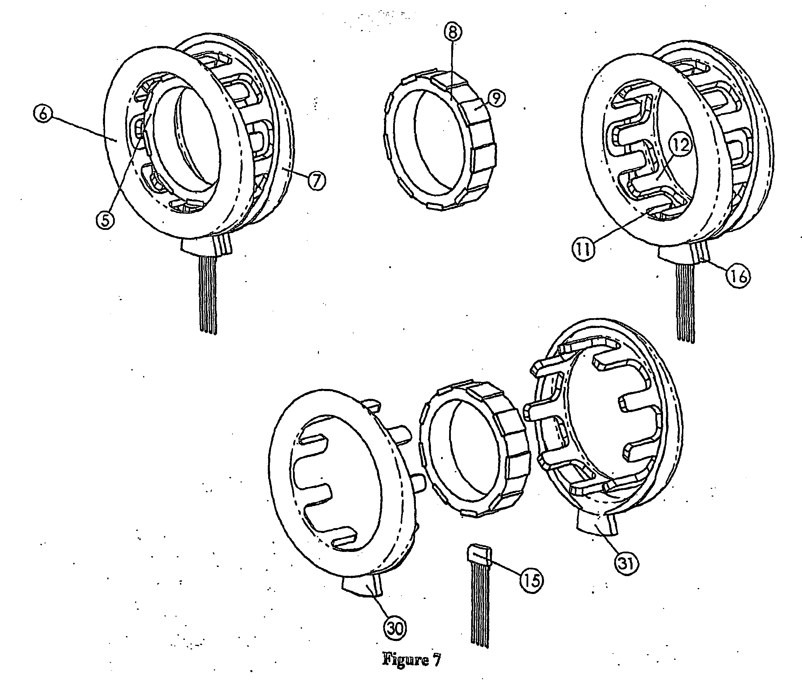

La figure 7 représente une autre variante de réalisation, dans laquelle les couronnes présentent deux zones de fermeture de flux réduites à des secteurs angulaires (30, 31) réduit dont les dimensions correspondent sensiblement aux dimensions de la sonde de Hall (15).

Le principe décrit auparavant ne se limite pas aux applications de capteur de couple de colonne de direction, mais peut être appliqué aux, mesures de très petits angles, telles que des applications de capteur de pédales de freinage ou d'accélérateur. On peut en effet imaginer que les 2 collecteurs ferromagnétiques (13) (14) ne se développent pas sur 360°, mais sont limités à quelques dizaines de degrés, comme indiqués à la figure 7.

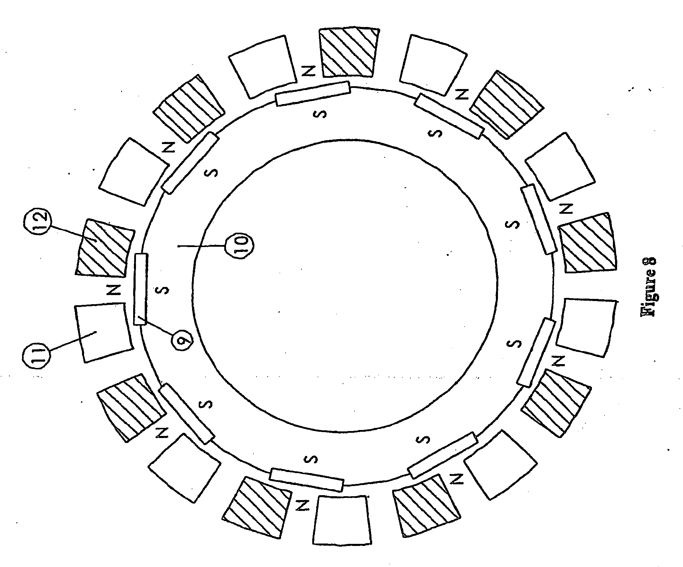

La figure 8 représente une vue en coupe transversale du capteur.

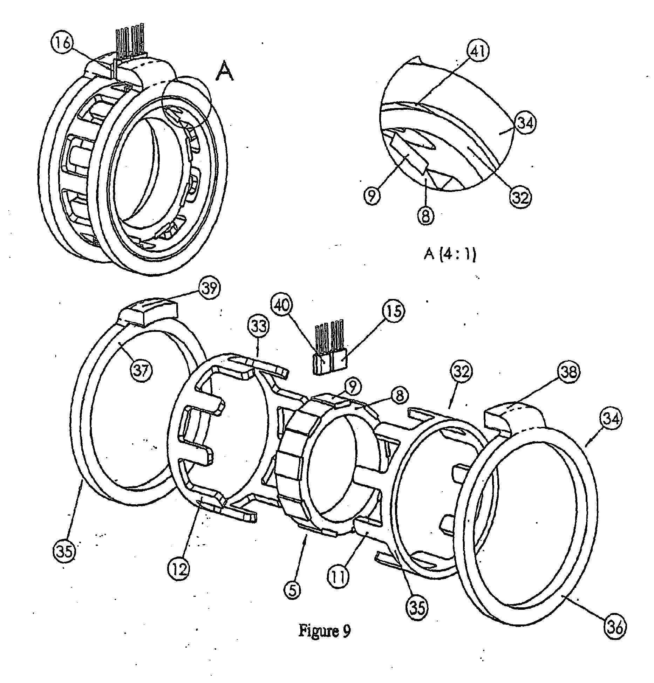

La variante de structure présentée sur la figure 9 a été développée dans le but de créer l'entrefer de détection (16) entre deux éléments fixes (34, 35).

De la même manière que dans les structures représentées sur les figures précédentes, une variation d'induction est créée dans les dents (11, 12) par un déphasage angulaire entre la première structure magnétique, c'est-à-dire le rotor (5), et deux structures magnétiques imbriquées, en l'occurrence des pièces dentées (32, 33). Le circuit magnétique est ensuite prolongé par des éléments fixes (34, 35) séparées des structures magnétiques (32, 33) par un jeu mécanique (41). Ainsi, dans cette variante, les couronnes (6, 7) sont ainsi constituées de deux pièces dentées mobiles (32, 33), et deux éléments fixes (34, 35).

Les deux éléments fixes (34, 35) sont composées de deux zones d'intégration du flux (36, 37) entourant, complètement (angle de 360°) ou partiellement, les pièces dentées (32, 33), et de deux concentrateurs de flux magnétique (38, 39) créant un entrefer de détection (16) dans lequel sont insérés le ou les éléments magnétosensibles (15, 40).

## Revendications

1. Capteur de position, notamment destiné à la détection de la torsion d'une colonne de direction, constitué par une première structure magnétique comprenant une pluralité d'aimants et une deuxième structure magnétique comprenant deux couronnes (6, 7) ferromagnétiques présentant une pluralité de dents (11, 12) s'étendant axialement et séparées par des intervalles vides permettant l'imbrication des dents de la couronne opposée, les deux structures magnétiques étant solidaires respectivement de deux parties en rotation relative, **caractérisé en ce que** les deux couronnes (6, 7) ferromagnétiques sont imbriquées et présentent chacune une partie sensiblement tubulaire formant des dents (11, 12) orientées axialement, reliées par une zone de fermeture de flux (13, 14), lesdites dents (11, 12) étant prolongées par une zone de fermeture de flux respectivement (13, 14) pour définir un entrefer (16) délimité par lesdites zones de fermeture de flux, dans lequel est placé au moins un élément magnétosensible (15).

2. Capteur de position selon la revendication 1, **caractérisé en ce que** les dents sont prolongées par une zone de fermeture de flux respectivement (13, 14) s'étendant globalement dans un plan transversal, perpendiculaire à l'orientation principale des dents, ces deux zones de fermeture de flux (13, 14) délimitant un entrefer dans lequel est positionné un élément magnétosensible.

3. Capteur de position selon la revendication 1 ou 2, **caractérisé en ce que** la première structure magnétique est constituée par une culasse tubulaire ferromagnétique, présentant une pluralité d'encoches tangentielles dans lesquelles sont logés des aimants minces aimantés sensiblement radialement en sens identiques [soit sous la forme d'aimants en forme de tuile aimantés radialement, soit sous la forme d'aimant parallélépipédique, aimantés selon une direction perpendiculaire au plan de la face principal, et donc parallèlement à une direction radiale passant par le centre de l'aimant considéré.

4. Capteur de position selon l'une au moins des revendications précédentes, **caractérisé en ce que** la hauteur des dents correspond sensiblement à la hauteur des aimants.

5. Capteur de position selon l'une au moins des revendications précédentes, **caractérisé en ce qu'**il comporte N élément magnétosensibles, N correspondant au nombre de phase d'un moteur à courant continu sans balai dont le déplacement est commande par ledit capteur.

6. Capteur de position selon l'une au moins des revendications précédentes, **caractérisé en ce que** les couronnes présentent des zones de fermeture de flux de forme discale transversale.

7. Capteur de position selon l'une au moins des revendications 1 à 5, **caractérisé en ce que** les couronnes présentent des zones de fermeture de flux de forme semi-torique.

8. Capteur de position selon l'une au moins des revendications 1 à 5, **caractérisé en ce que** les couronnes présentent des zones de fermeture de flux de forme tubulaire.

9. Capteur de position selon l'une au moins des revendications 1 à 5, **caractérisé en ce que** les couronnes présentent des zones de fermeture de flux découpées pour former une pluralité de dents.

10. Capteur de position selon l'une au moins des revendications précédentes, **caractérisé en ce que** les couronnes présentent des zones de fermeture de flux s'étendant sur 360°.

11. Capteur de position selon l'une au moins des revendications 1 à 9, **caractérisé en ce que** les couronnes présentent des zones de fermeture de flux s'étendant sur un secteur angulaire correspondant sensiblement à la dimension de l'élément magnétosensible.

12. Capteur de position selon la revendication 1, **caractérisé en ce que** les couronnes (6, 7) sont constituées de deux pièces dentées mobiles (32, 33), et de deux éléments fixes (34, 35), les deux éléments fixes étant composés de deux zones d'intégration du flux (36, 37) entourant les pièces dentées (32, 33), et de deux concentrateurs de flux magnétique (38, 39) créant un entrefer de détection (16) dans lequel sont insérés le ou les éléments magnétosensibles (15, 40).

13. Capteur de position selon la revendication 1, **caractérisé en ce qu'**il comporte N aimants (9), et **en ce que** chacune des couronnes de la deuxième structure présente N dents, l'élément magnétosensible (15) étant placé dans l'entrefer (16) entre les 2 collecteurs ferromagnétiques (13) (14) qui ont chacun collecté le flux de N dents.

14. Capteur de torsion comprenant deux parties rotatives reliées par une éprouvette élastique, et un capteur de position conforme à l'une au moins des revendications 1 à 13, constitué par une première structure magnétique comprenant une pluralité d'aimants et une deuxième structure magnétique comprenant deux couronnes (6,7) ferromagnétiques présentant une pluralité de dents (11,12) s'étendant axialement, lesdites dents étant séparées par des intervalles vides permettant l'imbrication des dents de la couronne opposée, les deux structures magnétiques étant solidaires respectivement de deux parties en rotation relative, **caractérisé en ce que** les deux couronnes (6, 7) ferromagnétiques sont imbriquées et présentent chacune une partie sensiblement tubulaire formant des dents (11, 12) orientées axialement, reliées par une zone de fermeture de flux (13, 14), et **en ce que** lesdites dents (11, 12) sont prolongées par une zone de fermeture de flux respectivement (13, 14) pour définir un entrefer (16) délimité par lesdites zones de fermeture de flux, dans lequel est placé au moins un élément magnétosensible (15).

15. Capteur de torsion selon la revendication 14 **caractérisé en ce que** les dents sont prolongées par une zone de fermeture de flux respectivement (13, 14) s'étendant globalement dans un plan transversal, perpendiculaire à l'orientation principale desdites dents.

16. Capteur de torsion selon la revendication 14 ou 15 **caractérisé en ce qu'**il comprend deux concentrateurs de flux magnétique (38, 39) créant un entrefer de détection (16) dans lequel sont insérés le ou les éléments magnétosensibles (15, 40).

## Claims

1. Position sensor, particularly intended for detection of the torsion of a steering column, consisting of a first magnetic structure comprised of a multiplicity of magnets and a second structure comprised of two ferromagnetic crowns (6, 7) presenting a multiplicity of teeth (11, 12) extending in the axial direction and separated by free intervals allowing interlocking of the teeth of the opposite crown, with the two magnetic structures being respectively interdependent with two parts in relative rotation, **characterised in that** the two ferromagnetic crowns (6, 7) are interlocked and each present a roughly tubular part forming teeth (11, 12) oriented in the axial direction, connected by a flow closure area (13, 14), with the said teeth (11, 12) being respectively extended by a flow closure area (13, 14) in order to form an air-gap (16) delimited by said flow closure areas in which at least one magnetosensitive element (15) is placed.

2. Position sensor according to claim 1, **characterised in that** the teeth are extended by a flow closure area respectively (13, 14), generally extending in a transverse plane, perpendicular to the main orientation of the teeth, with these two flow closure areas (13, 14) delimiting an air-gap in which a magnetosensitive element is located.

3. Position sensor according to claim 1 or 2, **characterised in that** the first magnetic structure consists of a ferromagnetic tubular breechblock, presenting a multiplicity of tangential slots in which slim magnets are housed magnetised more or less radially in identical directions, either in the form of tile-shaped magnets magnetised radially or in the form of a parallelipedal magnet, magnetised in a direction perpendicular to the plane of the main face and therefore parallel to a radial direction passing through the centre of the magnet in question.

4. Position sensor according to at least one of the above claims, **characterised in that** the height of the teeth roughly corresponds to the height of the magnets.

5. Position sensor according to at least one of the above claims, **characterised in that** it comprises N magnetosensitive elements, with N corresponding to the number of phases of a brushless direct current motor, the travel of which is controlled by said sensor.

6. Position sensor according to at least one of the above claims, **characterised in that** the crowns present flow closure areas with a transverse disc shape.

7. Position sensor according to at least one of claims 1 to 5, **characterised in that** the crowns present flow closure areas semitoric in shape.

8. Position sensor according to at least one of claims 1 to 5, **characterised in that** that crowns present flow closure areas tubular in shape.

9. Position sensor according to at least one of claims 1 to 5, **characterised in that** the crowns present flow closure areas serrated in order to form a multiplicity of teeth.

10. Position sensor according to at least one of the above claims, **characterised in that** the crowns present flow closure areas extending over 360°.

11. Position sensor according to at least one of the claims 1 to 9, **characterised in that** that the crowns present flow closure areas extending over an angular zone roughly corresponding to the size of the magnetosensitive element.

12. Position sensor according to claim 1, **characterised in that** the crowns (6, 7) are comprised of two mobile toothed components (32, 33) and two fixed elements (34, 35), with the two fixed elements being comprised of two flow integration zones (36, 37) surrounding the toothed components (32, 33) and of two magnetic flow concentrators (38, 39) creating a detection air-gap (16) into which the magnetosensitive elements (15, 40) are inserted.

13. Position sensor according to claim 1, **characterised in that** it comprises N magnets (9) and that each of the crowns of the second structure presents N teeth, with the magnetosensitive element (15) being positioned in the air-gap (16) between the 2 ferromagnetic collectors (13), (14), which have each collected the flow of N teeth.

14. Torsion sensor comprising two rotary sections connected by an elastic test bar and a position sensor in accordance with at least one of claims 1 to 13, consisting of a first magnetic structure comprising a multiplicity of magnets and a second magnetic structure comprising two ferromagnetic crowns (6, 7) presenting a multiplicity of teeth (11, 12) extending in the axial direction, with said teeth being separated by free intervals allowing interlocking of the teeth of the opposite crown, with the two magnetic structures being respectively interdependent with the two sections in relative rotation, **characterised in that** the two ferromagnetic crowns (6, 7) are interlocked and each present a roughly tubular section forming teeth (11, 12) oriented in the axial direction, connected by a flow closure area (13, 14) and **in that** said teeth (11, 12) are respectively extended by a flow closure area (13, 14) in order to form an air-gap (16) delimited by said flow closure areas, in which at least one magnetosensitive element (15) is positioned.

15. Torsion sensor according to claim 14, **characterised in that** the teeth are respectively extended by a flow closure area (13, 14) generally extending in a transverse plane perpendicular to the main orientation of said teeth.

16. Torsion sensor according to claim 14 or 15, **characterised in that** it comprises two magnetic flow concentrators (38, 39) creating a detection air-gap (16) into which the magnetosensitive elements (15, 40) are inserted.

## Patentansprüche

1. Positionsgeber insbesondere für die Entdeckung der Drehung einer Lenksäule bestimmt, bestehend aus einer ersten magnetischen Struktur, die mehrere Magnete umfaßt, und einer zweiten magnetischen Struktur, die zwei ferromagnetische Kränze (6, 7) umfaßt, die mehrere Zähne (11, 12) aufweisen und sich axial und getrennt durch leere Intervalle erstrecken, die das Eingreifen der Zähne des gegenüberliegenden Kranzes ermöglichen, wobei die beiden magnetischen Strukturen jeweils fest mit einem Teil in relativer Drehung verbunden sind, **dadurch gekennzeichnet, daß** die beiden ferromagnetischen Kränze (6, 7) ineinandergreifen und jeweils einen deutlich rohrförmigen Teil aufweisen, der axial ausgerichtete Zähne (11, 12) bildet, die durch eine Zone mit Flußverschluß (13, 14) verbunden sind, wobei die besagten Zähne (11, 12) durch eine Zone mit Flul3vexschluß (13 beziehungsweise 14) verlängert werden, um einen Luftspalt (16) zu definieren, der von den besagten Zonen mit Flußverschluß abgegrenzt wird, in den mindestens ein magnetempfindliches Element (15) plaziert ist.

2. Positionsgeber nach Anspruch 1, **dadurch gekennzeichnet, daß** die Zähne durch eine Zone mit Flußverschluß (13, 14) , die sich insgesamt in einer Querebene und senkrecht zur Hauptausrichtung der Zähne erstreckt, wobei diese beiden Zonen mit Flußverschluß (13, 14) einen Luftspalt abgrenzen, in den ein magnetempfindliches Element plaziert ist.

3. Positionsgeber nach Anspruch 1 oder 2, **dadurch** also **gekennzeichnet, daß** die erste magnetische Struktur aus einem rohrförmigen ferromagnetischen Joch besteht, das mehrere tangentiale Kerben aufweist, in denen dünne Magnete untergebracht sind, die deutlich in gleicher Richtung radial magnetisiert sind [entweder in Form von Magneten in Form von radial magnetisierten Ziegeln, oder in Form von parallelflachen Magneten, die in einer senkrecht zur Ebene der Hauptseite verlaufenden Richtung magnetisiert sind und also parallel zu einer radialen Richtung, die durch den Mittelpunkt des betrachteten Magneten geht.

4. Positionsgeber nach mindestens einem beliebigen der vorstehenden Ansprüche, **dadurch gekennzeichnet, daß** die Höhe der Zähne deutlich der Höhe der Magnete entspricht.

5. Positionsgeber nach mindestens einem beliebigen der vorstehenden Ansprüche, **dadurch gekennzeichnet, daß** er N magnetempfindliche Elemente umfaßt, wobei N der Anzahl Phasen eines bürstenlosen Gleichstrommotors entspricht, dessen Bewegung von besagtem Geber gesteuert wird.

6. Positionsgeber nach mindestens einem beliebigen der vorstehenden Ansprüche, **dadurch gekennzeichnet, daß** die Kränze Flußverschlußzonen in Querscheibenform aufweisen.

7. Positionsgeber nach mindestens einem beliebigen der vorstehenden Ansprüche 1 bis 5, **dadurch gekennzeichnet, daß** die Kränze Flußverschlußzonen in halbrunder Form aufweisen.

8. Positionsgeber nach mindestens einem beliebigen der vorstehenden Ansprüche 1 bis 5, **dadurch gekennzeichnet, daß** die Kränze Flußverschlußzonen in Rohrform aufweisen.

9. Positionsgeber nach mindestens einem beliebigen der vorstehenden Ansprüche 1 bis 5, **dadurch gekennzeichnet, daß** die Kränze aufgeschnittene Flußverschlußzonen aufweisen, damit sie mehrere Zähne bilden.

10. Positionsgeber nach mindestens einem beliebigen der vorstehenden Ansprüche, **dadurch gekennzeichnet, daß** die Kränze Flußverschlußzonen aufweisen, die sich über 360° erstrecken.

11. Positionsgeber nach mindestens einem beliebigen der vorstehenden Ansprüche 1 bis 9, **dadurch gekennzeichnet, daß** die Kränze Flußverschlußzonen aufweisen, die sich über einen winkelförmigen Sektor erstrecken, der deutlich der Dimension des magnetempfindlichen Elements entspricht.

12. Positionsgeber nach Anspruch 1, **dadurch gekennzeichnet, daß** die Kränze (6, 7) aus zwei mobilen gezahnten Teilen (32, 33) bestehen und aus zwei feststehenden Elementen (34, 35), wobei die beiden feststehenden Elemente aus zwei Flußaufnahmezonen (36, 37) bestehen, die die gezahnten Teile (32, 33) umgeben, und aus zwei Magnetflußkonzentratoren (38, 39), die einen Detektionsluftspalt (16) schaffen, in den das oder die magnetempfindliche(n) Elemente (15, 40) eingesetzt werden.

13. Positionsgeber nach Anspruch 1, **dadurch gekennzeichnet, daß** er N Magnete (9) umfaßt, und dadurch, daß jeder Kranz der zweiten Struktur N Zähne aufweist, wobei das magnetempfindliche Element (15) in den Luftspalt (16) zwischen den 2 ferromagnetischen Kollektoren (13) (14) plaziert ist, die jeweils den Fluß mit N Zähnen gesammelt haben.

14. Drehgeber, der zwei Drehteile umfaßt, die durch einen elastischen Probekörper verbunden sind, und ein Positionsgeber nach mindestens einem beliebigen der vorstehenden Ansprüche 1 bis 13, der aus einer ersten magnetischen Struktur gebildet wird, die mehrere Magnete umfaßt, und eine zweite magnetische Struktur, die zwei ferromagnetische Kränze (6, 7) umfaßt, die mehrere Zähne aufweisen (11, 12), die sich axial erstrecken, wobei die besagten Zähne durch leere Zwischenräume getrennt sind, was das Ineinandergreifen der Zähne des gegenüberliegenden Kranzes ermöglicht, wobei die beiden magnetischen Strukturen mit zwei Teilen in relativer Drehung fest verbunden sind, **dadurch gekennzeichnet, daß** die beiden ferromagnetischen Kränze (6, 7) ineinander greifen und jeweils einen deutlich rohrförmigen Teil aufweisen, der axial ausgerichtete Zähne (11, 12) bildet, die durch eine Flußverschlußzone (13, 14) verbunden sind, und dadurch, daß die besagten Zähne (11, 12) durch eine Flußverschlußzone (13, 14) jeweils verlängert werden, um einen Luftspalt (16) zu bilden, der von besagten Flußverschlußzonen abgegrenzt wird, in den mindestens ein magnetempfindliches Element (15) plaziert ist.

15. Drehgeber nach Anspruch 14, **dadurch gekennzeichnet, daß** die Zähne durch eine jeweilige Flußverschlußzone (13, 14) verlängert werden, die sich insgesamt in einer Querebene erstreckt, die senkrecht zur Hauptausrichtung der besagten Zähne ausgerichtet ist.

16. Drehgeber nach Anspruch 14 oder 15, **dadurch gekennzeichnet, daß** er zwei Magnetflußkonzentratoren (38, 39) umfaßt, die einen Detektionsspalt (16) schaffen, in den das oder die magnetempfindliche Element(e) (15, 40) eingesetzt wird/werden.
